(19) Europäisches Patentamt
European Patent Office
Office européen des brevets

(11) **EP 4 668 177 A1**

(12) **EUROPEAN PATENT APPLICATION**

(43) Date of publication:
**24.12.2025 Bulletin 2025/52**

(21) Application number: **25183211.9**

(22) Date of filing: **17.06.2025**

(51) International Patent Classification (IPC):
**G06N 20/10** (2019.01)   **G06Q 20/40** (2012.01)
**G06Q 40/08** (2012.01)

(52) Cooperative Patent Classification (CPC):
**G06N 20/10; G06Q 40/08**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **18.06.2024 IN 202421046856**

(71) Applicant: **Tata Consultancy Services Limited
Maharashtra (IN)**

(72) Inventors:
• **TALUKDAR, Shantanu Shyamal**
  **1082MS Amsterdam (NL)**
• **KURALLA, Hemakiran Gupta**
  **1932 Brussels (BE)**
• **GHOSE, Avik**
  **700135 Kolkata (IN)**

(74) Representative: **Goddar, Heinz J.
Boehmert & Boehmert
Anwaltspartnerschaft mbB
Pettenkoferstrasse 22
80336 München (DE)**

(54) **SENSOR BASED FRAUD DETECTION SYSTEM FOR ON-DEMAND INSURANCE**

(57) Users tend to exploit the on demand insurance model, by only switching on the insurance when a user want to make a claim, which creates fraud risks. Present disclosure provides method and system for detecting fraudulent claims in on-demand insurance space. The system first receive inputs, such as accelerometer signal data, GPS data and time-stamp data. The system then performs vector normalization by converting accelerometer signal into resultant vector which is then normalized to obtain normalized sample. Thereafter, system detect peaks present in normalized sample. Further, system identifies features, such as amplitude, slope value and area under curve from detected peaks. Finally, system trains linear support vector machine (SVM) classifier based on identified features, GPS data, time-stamp data and labelled data to obtain trained SVM classifier. The system then uses trained SVM classifier to classify peaks obtained from real-time event into class, such as normal usage class or drop/damage class.

receiving, by a system via one or more hardware processors, a plurality of inputs from each user device of a plurality of user devices associated with a plurality of users, wherein the plurality of inputs comprises one or more of an accelerometer signal data, a global positioning system (GPS) data and a time-stamp data, and wherein the accelerometer signal data comprises one or more accelerometer signals — 302

sampling, by the system via the one or more hardware processors, each accelerometer signal of the one or more accelerometer signals at a predefined frequency range to obtain one or more sampled signals — 304

splitting, by the system via the one or more hardware processors, the one or more sampled signals into a predefined window size, to obtain one or more signal windows — 306

for each signal window of the one or more signal windows, identifying, by the system via the one or more hardware processors, one or more features by performing: — 308

converting at least one sample signal present in a respective signal window into a resultant vector by performing a L2-norm on the at least one sample signal using a Euler's equation — 308a

normalizing the resultant vector using a normalization technique to obtain a normalized sample, wherein a predefined normalization threshold is used to perform the normalization using the normalization technique — 308b

A

300

**FIG. 3A**

EP 4 668 177 A1

A

interpolating the normalized sample using an interpolation technique to obtain an interpolated sample for the respective signal window, wherein the interpolated sample comprises uniform distribution of the at least one sample signal present in the respective signal window

~ 308c

filtering the interpolated sample using a sliding window average filter to obtain a filtered sample

~ 308d

detecting one or more peaks that are present in the filtered sample using a slope change based peak detection technique, wherein a peak whose peak height is more than a predefined peak threshold is detected from among the one or more peaks using the slope change based peak detection technique

~ 308e

identifying, by the system via the one or more hardware processors, the one or more features from each peak of the detected one or more peaks, wherein the one or more features comprises one or more of an amplitude, a slope value and an area under curve

~ 308f

**FIG. 3B**

300

**Description**

CROSS-REFERENCE TO RELATED APPLICATIONS AND PRIORITY

The present application claims priority to Indian application no. 202421046856, filed on June 18, 2024.

TECHNICAL FIELD

The disclosure herein generally relates to on-demand insurance fraud detection, and, more particularly, to a method and a system for detecting raudulent claims in an on-demand insurance space.

BACKGROUND

On-demand insurance is an emerging business model provided by Insurers in which customers can opt in and opt out based on their usage need. Customers can insure valuables like mobile devices, laptops, cameras, home, auto, rental, travel etc. The on-demand insurance is evolving continuously with more coverages. While it is an attractive proposition for customers, the insurers face challenge due to high risk exposure.

As the users of the on-demand insurance are provided with the facility to turn insurance coverage on and off at any time, some users tend to exploit the on demand-model, by only switching on the insurance when a user want to make a claim, which creates fraud risks.

Further, to keep the on-demand business sustainable, insurers are required to keep the processes digitized so that their overhead cost is low. Thus, there are limited people in business operations and claims checks are generally done on high-risk items by humans, which further leads to missing out on the least probable fraud types.

Additionally, the loss ratio which is one of the businesses key performance indicator (KPI) for measuring the insurer business performance i.e., whether a balance is maintained between claims payouts and premium collection, which further ensures profitability and sustainable growth for the insurer, is always a concern for the on-demand insurers as their business performances comes down due to increased claim payout caused by fraudulent claims.

SUMMARY

Embodiments of the present disclosure present technological improvements as solutions to one or more of the above-mentioned technical problems recognized by the inventors in conventional systems. For example, in one aspect, there is provided a processor implemented method for detecting fraudulent claims in an on-demand insurance space. The method comprises receiving, by a system via one or more hardware processors, a plurality of inputs- from each user device of a plurality of user devices associated with a plurality of users, wherein the plurality of inputs comprises one or more of an accelerometer signal data, a global positioning system (GPS) data and a time-stamp data, and wherein the accelerometer signal data comprises one or more accelerometer signals; sampling, by the system via the one or more hardware processors, each accelerometer signal of the one or more accelerometer signals at a predefined frequency range to obtain one or more sampled signals; splitting, by the system via the one or more hardware processors, the one or more sampled signals into a predefined window size, to obtain one or more signal windows; for each signal window of the one or more signal windows, identifying, by the system via the one or more hardware processors, one or more features by performing: converting at least one sample signal present in a respective signal window into a resultant vector by performing a L2-norm on the at least one sample signal using a Euler's equation; normalizing the resultant vector using a normalization technique to obtain a normalized sample, wherein a predefined normalization threshold is used to perform the normalization using the normalization technique; interpolating the normalized sample using an interpolation technique to obtain an interpolated sample for the respective signal window, wherein the interpolated sample comprises uniform distribution of the at least one sample signal present in the respective signal window; filtering the interpolated sample using a sliding window average filter to obtain a filtered sample; detecting one or more peaks that are present in the filtered sample using a slope change based peak detection technique, wherein a peak whose peak height is more than a predefined peak threshold among the one or more peaks is detected using the slope change based peak detection technique; and identifying the one or more features from each peak of the one or more detected peaks, wherein the one or more features comprises one or more of an amplitude, a slope value and an area under curve..

In an embodiment, the method further comprises: training, by the system via the one or more hardware processors, a linear support vector machine (SVM) classifier based on the one or more identified features, the GPS data, the time-stamp data and the labelled data to obtain a trained SVM classifier, wherein the trained SVM classifier classifies at least one peak present in a real-time accelerometer signal data into one of a class of one or more predefined classes, and wherein the one or more predefined classes comprises a normal usage class, and a drop or fall or strike class.

In an embodiment, the method further comprises: using, by the system via the one or more hardware processors, the class, a real-time GPS data and a real-time time-stamp data to create a spatio-temporal map of a real-time event; matching, by the system via the one or more hardware processors, the spatio-temporal map with a real-time user claim story obtained from a user device associated with a user, wherein the user provides the real-time user claim story while applying for an on-demand insurance claim; and determining, by the system via the one or more hardware processors, whether the on-demand insurance claim is a valid claim or an in-valid claim based on the matching.

In an embodiment, the method further comprises: displaying, by the system via the one or more hardware processors, the on-demand insurance claim is the valid claim upon determining that the spatio-temporal map matches with the real-time user claim story.

In an embodiment, the method further comprises: displaying, by the system via the one or more hardware processors, the on-demand insurance claim is the in-valid claim upon determining that the spatio-temporal map does not matches with the real-time user claim story.

In an embodiment, the normalization technique is min or max normalization technique.

In another aspect, there is provided a system for detecting fraudulent claims in an on-demand insurance space. The system comprises a memory storing instructions; one or more communication interfaces; and one or more hardware processors coupled to the memory via the one or more communication interfaces, wherein the one or more hardware processors are configured by the instructions to: receive a plurality of inputs- from each user device of a plurality of user devices associated with a plurality of users, wherein the plurality of inputs comprises one or more of an accelerometer signal data, a global positioning system (GPS) data and a time-stamp data, and wherein the accelerometer signal data comprises one or more accelerometer signals; sample each accelerometer signal of the one or more accelerometer signals at a predefined frequency range to obtain one or more sampled signals; split the one or more sampled signals into a predefined window size, to obtain one or more signal windows; for each signal window of the one or more signal windows, identify one or more features by performing: convert at least one sample signal present in a respective signal window into a resultant vector by performing a L2-norm on the at least one sample signal using a Euler's equation; normalize the resultant vector using a normalization technique to obtain a normalized sample, wherein a predefined normalization threshold is used to perform the normalization using the normalization technique; interpolate the normalized sample using an interpolation technique to obtain an interpolated sample for the respective signal window, wherein the interpolated sample comprises uniform distribution of the at least one sample signal present in the respective signal window; filter the interpolated sample using a sliding window average filter to obtain a filtered sample; detect one or more peaks that are present in the filtered sample using a slope change based peak detection technique, wherein a peak whose peak height is more than a predefined peak threshold among the one or more peaks is detected using the slope change based peak detection technique; and identify the one or more features from each peak of the one or more detected peaks, wherein the one or more features comprises one or more of an amplitude, a slope value and an area under curve..

In yet another aspect, there are provided one or more non-transitory machine-readable information storage mediums comprising one or more instructions which when executed by one or more hardware processors detect fraudulent claims in an on-demand insurance space by receiving, by a system, a plurality of inputs- from each user device of a plurality of user devices associated with a plurality of users, wherein the plurality of inputs comprises one or more of an accelerometer signal data, a global positioning system (GPS) data and a time-stamp data, and wherein the accelerometer signal data comprises one or more accelerometer signals; sampling, by the system via the one or more hardware processors, each accelerometer signal of the one or more accelerometer signals at a predefined frequency range to obtain one or more sampled signals; splitting, by the system, the one or more sampled signals into a predefined window size, to obtain one or more signal windows; for each signal window of the one or more signal windows, identifying, by the system, one or more features by performing: converting at least one sample signal present in a respective signal window into a resultant vector by performing a L2-norm on the at least one sample signal using a Euler's equation; normalizing the resultant vector using a normalization technique to obtain a normalized sample, wherein a predefined normalization threshold is used to perform the normalization using the normalization technique; interpolating the normalized sample using an interpolation technique to obtain an interpolated sample for the respective signal window, wherein the interpolated sample comprises uniform distribution of the at least one sample signal present in the respective signal window; filtering the interpolated sample using a sliding window average filter to obtain a filtered sample; detecting one or more peaks that are present in the filtered sample using a slope change based peak detection technique, wherein a peak whose peak height is more than a predefined peak threshold among the one or more peaks is detected using the slope change based peak detection technique; and identifying the one or more features from each peak of the one or more detected peaks, wherein the one or more features comprises one or more of an amplitude, a slope value and an area under curve..

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 is an example representation of an environment, related to at least some example embodiments of the present disclosure.

FIG. 2 illustrates an exemplary block diagram of a system for detecting fraudulent claims in an on-demand insurance space, in accordance with an embodiment of the present disclosure.

FIGS. 3A and 3B, collectively, illustrate an exemplary flow diagram of a method for detecting fraudulent claims in an on-demand insurance space, in accordance with an embodiment of the present disclosure.

FIG. 4A, with reference to FIGS. 1 to 3A-3B, illustrates a graphical representation showing one or more peaks obtained after regular usage of a mobile device, in accordance with an embodiment of the present disclosure.

FIG. 4B, with reference to FIGS. 1 to 3A-3B, illustrates another graphical representation showing one or more drop peaks obtained after drop/fall of the mobile device, in accordance with an embodiment of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

As discussed earlier, on-demand insurance provides a great proposition to customers. However, there are higher fraud risks faced by insurers when some customers exploit the on demand-model by only switching on the insurance when the users want to make a claim. This leads to insurers paying out more on insurance claims rather than earning from premiums which further impacts their loss ratio business KPI.

Further, in case of mobile phone damage, when customer initiates a claim by providing a user claim story/reason, it becomes difficult for the insurer to determine the actual cause of damage with the customer stated reason present in the user claim story as there are no means other than manual verification to establish the authenticity of the claim. The manual verification further increases the claim settlement time and the operational expenses for the insurer.

Additionally, the insurers try to optimize the resources in the claim handling department which further leads to missing out on checking of every claim payout made by the department. So, the limited use of technology to cross verify the claim reason stated by customer with the actual reason results in millions of dollars loss in reimbursement cost for the insurer every year.

So, a technique that can automatically verify the authenticity of the claims by cross checking a user claim story with an actual reason without requiring manual intervention is still to be explored.

Embodiments of the present disclosure overcome the above-mentioned disadvantages by providing a system and a method for detecting fraudulent claims in an on-demand insurance space. In particular, the system helps in determining fraudulent claims initiated for valuables, such as phones, bike, etc., by using an optimum mix of technologies, such as phone sensors, global positioning system (GPS) and artificial intelligence (AI).

The system of the present disclosure first receives a plurality of inputs, such as an accelerometer signal data, a GPS data and a time-stamp data from a plurality of user devices associated with a plurality of users. The system then sample one or more accelerometer signals present in the accelerometer signal data at a predefined frequency range to obtain sampled signals. Thereafter, the system obtains one or more signal windows by splitting the sampled signals in predefined window size. Further, for each signal window of the one or more signal windows, the system performs vector normalization by converting sample signal present in respective signal window into a resultant vector which is then normalized using a min/max normalization with a maximum value of '2g' and a minimum value of '0' to obtain a normalized sample.

The normalized sample is then interpolated using an interpolation technique to obtain an interpolated sample for the respective signal window. Then, the system performs filtering of the interpolated sample using a sliding moving average filter to remove any noise that is present in the interpolated sample. A filtered sample with no noise is obtained after filtering.

Thereafter, the system detects one or more peaks that are present in the filtered sample using a slope change based peak detection technique in which a predefined peak threshold is used to identify peaks that can be considered for further processing.

Further, the system identifies one or more features from each peak of the one or more detected peaks. The one or more features includes an amplitude, a slope value and an area under curve of a peak. The system then trains a linear support vector machine (SVM) classifier based on the one or more identified features, the GPS data, the time-stamp data and labelled data to obtain a trained SVM classifier.

The system uses the trained SVM classifier to classify peaks obtained from a real-time event into a class, such as a normal usage class or a drop/damage class. The class information along with a real-time GPS data and a real-time time-stamp data received for the real-time event is used to create a spatio-temporal map of the real-time event. The created spatio-temporal map is then matched with a real-time user claim story obtained from a user device associated with a user that has applied for an on-demand insurance claim. Finally, the system determines whether the on-demand insurance claim is a valid claim, or an in-valid claim based on the matching.

In the present disclosure, the system uses real-time insights, such as accelerometer signal data, GPS data and time-stamp data for automatic identification of type of a fall of a device for which an on-demand insurance claim is raised, thereby eliminating the need to perform manual cross-verification of a claim reason stated by customer with an actual reason, which further reduces the claim settlement time. Further, the system automatically classifies the type of fall into some predefined categories, such as simple drop, walking drop, trying to catch, running, workout, daily usage scenarios and covering scenarios based on the GPS data and then cross verifies the class with a real-time user claim story i.e., a user stated reason for the fall of the user device in case of a real-time event, thereby improving accuracy of the fraudulent claim detection as exact reason behind the fall of the user device is already known to the system.

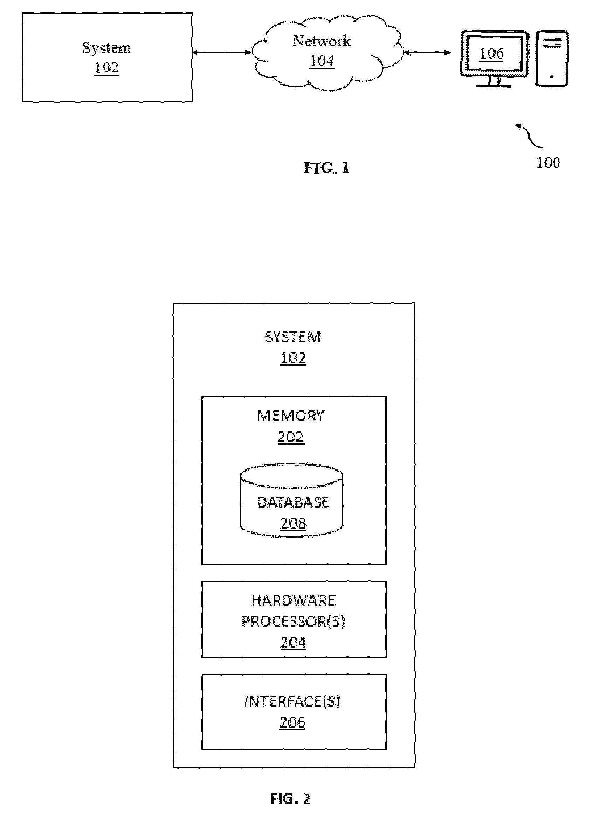

Referring now to the drawings, and more particularly to FIGS. 1 through 4B, where similar reference characters denote corresponding features consistently throughout the figures, there are shown preferred embodiments and these embodiments are described in the context of the following exemplary system and/or method.

FIG. 1 illustrates an exemplary representation of an environment 100 related to at least some example embodiments of the present disclosure. Although the environment 100 is presented in one arrangement, other embodiments may include the parts of the environment 100 (or other parts) arranged otherwise depending on, for example, sampling of accelerometer signals, normalization of resultant vector, interpolation of normalized sample etc. The environment 100 generally includes a system 102, user devices 106a-106n, a customer device 108 each coupled to, and in communication with (and/or with access to) a network 104. It should be noted that one customer device is shown for explanation purpose, there can be multiple customer devices.

The network 104 may include, without limitation, a light fidelity (Li-Fi) network, a local area network (LAN), a wide area network (WAN), a metropolitan area network (MAN), a satellite network, the Internet, a fiber optic network, a coaxial cable network, an infrared (IR) network, a radio frequency (RF) network, a virtual network, and/or another suitable public and/or private network capable of supporting communication among two or more of the parts or users illustrated in FIG. 1, or any combination thereof.

Various entities in the environment 100 may connect to the network 104 in accordance with various wired and wireless communication protocols, such as Transmission Control Protocol and Internet Protocol (TCP/IP), User Datagram Protocol (UDP), 2nd Generation (2G), 3rd Generation (3G), 4th Generation (4G), 5th Generation (5G) communication protocols, Long Term Evolution (LTE) communication protocols, or any combination thereof.

The user devices 106a-106n are associated with a plurality of users who have opted for an on-demand insurance for objects, such as mobile phone. Example of the user devices 106a-106n include, but are not limited to, a personal computer (PC), a mobile phone, a tablet device, a Personal Digital Assistant (PDA), a server, a voice activated assistant, a smartphone, and a laptop.

The customer device 108 is associated with a customer who has raised an on-demand insurance claim request for an object, such as mobile phone or a bike. Examples of the customer device 108 include, but are not limited to, a personal computer (PC), a mobile phone, a tablet device, a Personal Digital Assistant (PDA), a server, a voice activated assistant, a smartphone, and a laptop. The customer uses the customer device 108 for raising an on-demand insurance claim for the object by providing a real-time user claim story along with other details associated with the object.

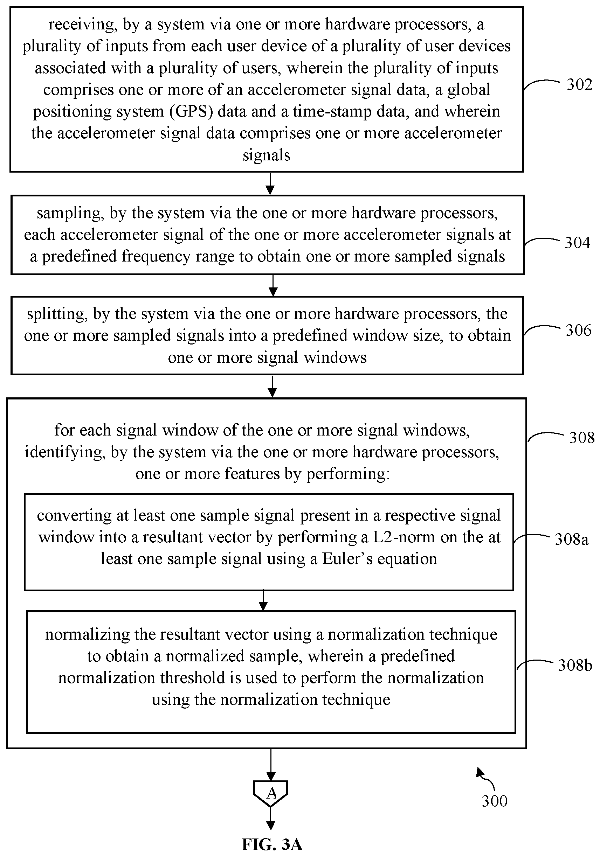

The system 102 includes one or more hardware processors and a memory. The system 102 is first configured to receive a plurality of inputs, such as an accelerometer signal data, a global positioning system (GPS) data and a time-stamp data via the network 104 from each user device of the user devices 106a-106n. The system 102 then uses the accelerometer signal data to identify one or more features which are then used to train a support vector machine (SVM) classifier along with labelled data. The training of the SVM classifier is explained in detail with reference to FIG. 3A-3B.

The SVM classifier, once trained, can classify the fall of the object for which an on-demand insurance claim request is raised as a normal usage class, and a drop or fall or strike class. The class information along with a real-time GPS data and a real-time time-stamp data received from the object is used by the system 102 to create a spatio-temporal map of a real-time event that has caused damaging/losing of the object. The system 102 then matches the spatio-temporal map with the real-time user claim story obtained from the customer device 108. Thereafter, the system 102 determines whether the on-demand insurance claim is a valid claim or an in-valid claim based on the matching. In particular, if the spatio-temporal map matches with the real-time user claim story, the system 102 considers the on-demand insurance claim as a valid claim else an in-valid claim.

The number and arrangement of systems, devices, and/or networks shown in FIG. 1 are provided as an example. There may be additional systems, devices, and/or networks; fewer systems, devices, and/or networks; different systems, devices, and/or networks; and/or differently arranged systems, devices, and/or networks than those shown in FIG. 1. Furthermore, two or more devices shown in FIG. 1 may be implemented within a single device, or a single device shown in FIG. 1 may be implemented as multiple, distributed systems or devices. Additionally, or alternatively, a set of devices (e.g., one or more devices) of the environment 100 may perform one or more functions described as being performed by another set of systems or another set of devices of the environment 100 (e.g., refer scenarios described above).

FIG. 2 illustrates an exemplary block diagram of a system 200 for detecting fraudulent claims in an on-demand insurance space, in accordance with an embodiment of the present disclosure. In some embodiments, the system 200 is embodied as a cloud-based and/or software as a service (SaaS) based architecture. In some embodiments, the system 200 may be implemented in a server system. In some embodiments, the system 200 may be implemented in a variety of computing systems, such as laptop computers, notebooks, hand-held devices, workstations, mainframe computers, servers, a network cloud and the like.

In an embodiment, the system 102 includes one or more processors 204, communication interface device(s) or input/output (I/O) interface(s) 206, and one or more data storage devices or memory 202 operatively coupled to the one or more processors 204. The one or more processors 204 may be one or more software processing modules and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is configured to fetch and execute computer-readable instructions stored in the memory. In an embodiment, the system 102 can be implemented in a variety of computing systems, such as laptop computers, notebooks, hand-held devices, workstations, mainframe computers, servers, a network cloud and the like.

The I/O interface device(s) 206 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 202 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment a database 208 can be stored in the memory 202, wherein the database 208 may comprise, but are not limited to, a predefined window size, a predefined frequency range, the normalization technique, the interpolation technique, the slope change based peak detection technique, a predefined peak threshold, one or more processes and the like. The memory 202 further comprises (or may further comprise) information pertaining to input(s)/output(s) of each step performed by the systems and methods of the present disclosure. In other words, input(s) fed at each step and output(s) generated at each step are comprised in the memory 202 and can be utilized in further processing and analysis.

It is noted that the system 102 as illustrated and hereinafter described is merely illustrative of an apparatus that could benefit from embodiments of the present disclosure and, therefore, should not be taken to limit the scope of the present disclosure. It is noted that the system 102 may include fewer or more components than those depicted in FIG. 2.

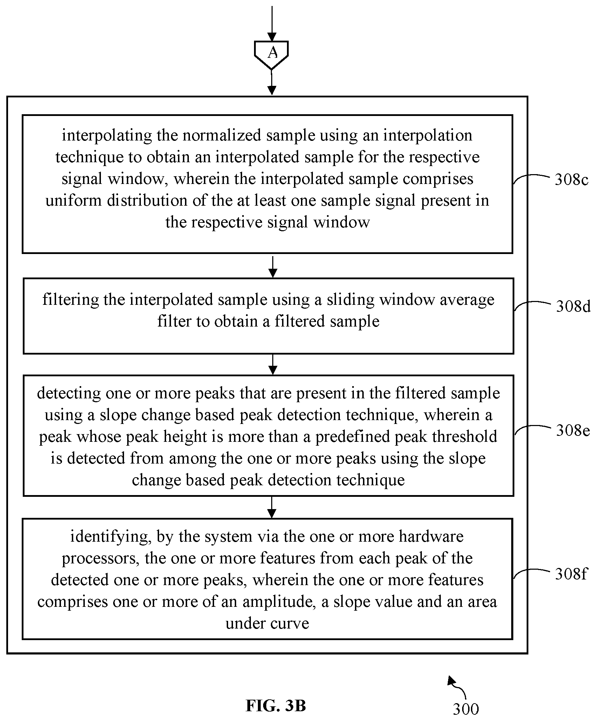

FIGS. 3A and 3B, collectively, with reference to FIGS. 1 to 2, represent an exemplary flow diagram of a method 300 for detecting fraudulent claims in the on-demand insurance space, in accordance with an embodiment of the present disclosure. The method 300 may use the system 102 of FIGS. 1 and 2 for execution. In an embodiment, the system 102 comprises one or more data storage devices or the memory 202 operatively coupled to the one or more hardware processors 204 and is configured to store instructions for execution of steps of the method 300 by the one or more hardware processors 204. The sequence of steps of the flow diagram may not be necessarily executed in the same order as they are presented. Further, one or more steps may be grouped together and performed in form of a single step, or one step may have several sub-steps that may be performed in parallel or in sequential manner. The steps of the method of the present disclosure will now be explained with reference to the components of the system 102 as depicted in FIG. 2 and FIG. 1.

At step 302 of the present disclosure, the one or more hardware processors 204 of the system 102 receive a plurality of inputs from each user device of a plurality of user devices, such as the user devices 102a-102n associated with a plurality of users. The plurality of inputs includes one or more of an accelerometer signal data, a global positioning system (GPS) data, and a time-stamp data. In an embodiment, the accelerometer signal data includes one or more accelerometer signals.

At step 304 of the present disclosure, the one or more hardware processors 204 of the system 102 sample each accelerometer signal of the one or more accelerometer signals at a predefined frequency range to obtain one or more sampled signals. In an embodiment, the predefined frequency range of 15-25 Hz is used for sampling of each accelerometer signal.

At step 306 of the present disclosure, the one or more hardware processors 204 of the system 102 split the one or more sampled signals into a predefined window size. In particular, the accelerometer signals obtained after sampling are split into one or more signal windows based on the predefined window size. In an embodiment, without limiting the scope of the embodiments disclosed herein, the predefined window size of 5 seconds is used for splitting the sampled signals. The one or more signal windows each of 5 seconds are obtained after splitting.

At step 308 of the present disclosure, the one or more hardware processors 204 of the system 102 identify one or more features for each signal window of the one or more signal windows by performing a plurality of steps 308a through 308f.

More specifically, at step 308a of the present disclosure, the one or more hardware processors 204 of the system 102 convert at least one sample signal present in a respective signal window into a resultant vector by performing a L2-norm on the at least one sample signal using a Euler's equation. In particular, the L2-norm is performed on the sample signal to remove directional component from the sample signal. The Euler's equation used for performing vector normalization i.e., for performing conversion of the least one sample signal into the resultant vector is mentioned below.

$$s \;=\; sqrt\,(a_x^2 + \; a_y^2 \; + \; a_z^2),$$

Where, $s$ represents sample signal, and
$a_x$, $a_y$ and $a_z$ represent three coordinate values of the sample signal i.e., the accelerometer signal.

At step 308b of the present disclosure, the one or more hardware processors 204 of the system 102 normalize the resultant vector using a normalization technique to obtain a normalized sample. A predefined normalization threshold is used to perform the normalization using the normalization technique. In an embodiment, the normalization technique used is a min-max normalization technique with the predefined normalization threshold of 2$g$. However, any other normalization technique can be used for the same purpose.

In particular, the min-max normalization with maximum value of '2$g$' and minimum value of '0' is performed. The minimum value of '0' is trivial as the resultant acceleration has only positive values. The resultant acceleration is given by:

$$a_{res} = \sqrt{a_x^2 + \; a_y^2 \; + \; a_z^2},$$

Where, $a_x$, $a_y$ and $a_z$ represents acceleration in $x$ direction, $y$ direction and $z$ direction of an object, respectively.

So, the normalization step is:

$$a_{norm} = a_{res}\,2g,$$

Where, $g$ represents acceleration due to gravity ~ 10 m/s2.

It should be noted that the maximum value of 2$g$ is taken based on the fact that the free fall under gravity shows an acceleration of (0), whereas a sudden jerk or drop or fall produces an acceleration of more than 2$g$.

At step 308c of the present disclosure, the one or more hardware processors 204 of the system 102 interpolate the normalized sample using an interpolation technique to obtain an interpolated sample for the respective signal window. In an embodiment, without limiting the scope of the invention, the interpolation technique is a cubic-spline interpolation technique. The interpolated sample includes uniform distribution of the at least one sample signal present in the respective signal window. In particular, a uniform sample window is obtained from the normalized sample after interpolation.

At step 308d of the present disclosure, the one or more hardware processors 204 of the system 102 filter the interpolated sample using a sliding window average filter which is a low pass filter to obtain a filtered sample. It should be noted that any other available filtering technique can be used for the same purpose.

In an embodiment, a sliding window based moving average filter used for filtering is mentioned below.

$$a_i = \left(\textstyle\sum_{j=i-r}^{j=i+r} a_j\right)/(2r + 1),$$

Where $a_i$ represents acceleration in $i$th sample,

$r$ represents window length, and
$a_j$ represents the jth sample of accelerometer data in the interval [$i - r$, $i + r$].

As can be seen, the sliding window based moving average filter mentioned above does sampling while preserving a time-axis. Hence, this method is computationally less expensive than other filtering methods, such as a finite impulse response (FIR) filter, as FIR filter involves multiplication and addition (convolution) and multiplication is far more expensive than addition.

At step 308e of the present disclosure, the one or more hardware processors 204 of the system 102 detect one or more peaks that are present in the filtered sample using a slope change based peak detection technique. In particular, a peak whose peak height is more than a predefined peak threshold is detected using the slope change based peak detection technique. In an embodiment, the predefined peak threshold of 0.2 is used for peak detection.

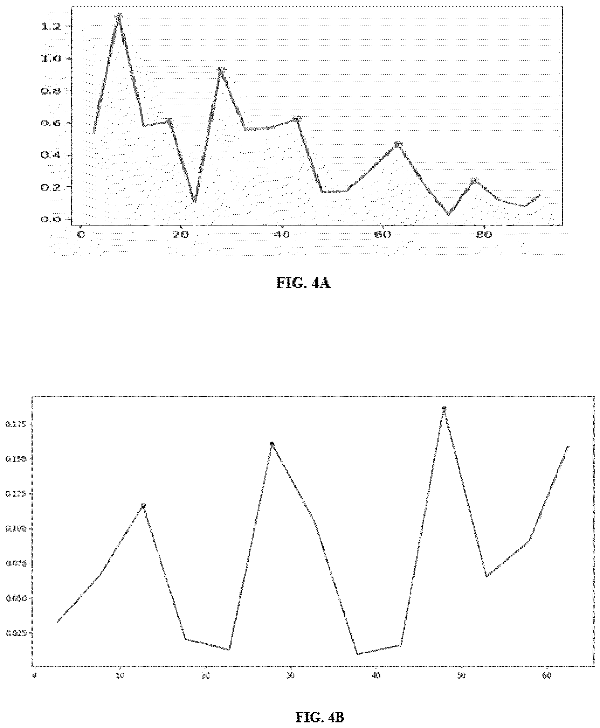

As the system 102 is developed to detect phone drop scenarios or bike theft scenarios, detection of impact is must. As the impact shows up in acceleration signal as 'peaks', the system 102 tries to determine the one or more peaks as it forms a good base for features that can be used for detecting drop scenarios. An example representation of regular usage peaks and drop usage peaks is shown with respect to FIG. 4A and FIG. 4B, respectively.

At step 308f of the present disclosure, the one or more hardware processors 204 of the system 102 identify the one or more features from each peak of the one or more detected peaks. The one or more features includes one or more of an amplitude, a slope value (difference between two samples/time interval between them), and an area under curve (difference between two samples at the end of the peaks * the time interval during the peak).

In an embodiment, once the features are identified, the system 102 trains a linear support vector machine (SVM) classifier based on the one or more identified features, the GPS data, the time-stamp data and labelled data to obtain a trained SVM classifier. In an embodiment, the labelled data is manually created.

The trained SVM classifier then classifies at least one peak present in a real-time accelerometer signal data into one of a class of one or more predefined classes. The one or more predefined classes includes, but are not limited to, a normal usage class, and a drop or fall or strike class. The real-time accelerometer signal data is received from an object, such as a mobile phone used by a customer, such as the customer 108 who has applied for an on-demand insurance claim. In one embodiment, a tiny machine learning (ML) model is created from the trained SVM classifier which runs inference on a device like the mobile phone used by the customer.

In an exemplary scenario, when a customer applies for an on-demand insurance claim for an object using a customer device, the customer is required to provide a real-time user claim story in which he is required to provide details about a real-time event that led to the damage/losing of the object. In parallel, the system 102 uses the class information obtained from the trained SVM classifier, a real-time GPS data and a real-time time-stamp data obtained from the object covered under an on-demand insurance to create a spatio-temporal map of the real-time event. In an embodiment, the tiny ML model running on the object provides all the information, such as the class information, the real-time GPS data and the real-time time-stamp data.

The system 102 then matches the spatio-temporal map with the real-time user claim story obtained from the customer device. Thereafter, the system 102 determines whether the on-demand insurance claim is a valid claim or an in-valid claim based on the matching, In particular, if the spatio-temporal map matches with the real-time user claim story, the system 102 identifies that the on-demand insurance claim is a valid claim and then informs the same to the customer by displaying a message to the customer.

The system 102 displays that the on-demand insurance claim is an invalid claim upon determining that the spatio-temporal map does not matches with the real-time user claim story.

FIG. 4A, with reference to FIGS, 1 to 3A-3B, illustrates a graphical representation showing one or more peaks obtained after regular usage of a mobile device, in accordance with an embodiment of the present disclosure.

FIG. 4B, with reference to FIGS, 1 to 3A-3B, illustrates another graphical representation showing one or more drop peaks obtained after drop/fall of the mobile device, in accordance with an embodiment of the present disclosure.

As seen in FIGS. 4A and 4B, the nature of peaks vary between regular usage peaks and drop peaks. Hence, the peak based features are considered for training the liner SVM classifier as they can certainly increase the accuracy of fraud detection.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

As discussed earlier, in the on-demand insurance space, technology usage is negligible which ultimately leads to millions of dollars loss in reimbursement cost for the insurer every year. So, to overcome the disadvantages, embodiments of the present disclosure provide a system and a method for detecting fraudulent claims in the on-demand insurance space. More specifically, the system uses real-time insights, such as accelerometer signal data, GPS data and time-stamp data for automatic identification of type of a fall of a device for which an on-demand insurance claim is raised, thereby eliminating the need to perform manual cross-verification of a claim reason stated by customer with an actual reason, which further reduces the claim settlement time. Further, the system automatically classifies the type of fall into some predefined categories, such as simple drop, walking drop, trying to catch, running, workout, daily usage scenarios and covering scenarios based on the GPS data and then cross verifies the class with a real-time user claim story i.e., a user stated reason for the fall of the user device in case of a real-time event, thereby improving accuracy of the fraudulent claim detection as exact reason behind the fall of the user device is already known to the system.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method (300), comprising:

   receiving (302), by a system via one or more hardware processors, a plurality of inputs from each user device of a plurality of user devices associated with a plurality of users, wherein the plurality of inputs comprises one or more of an accelerometer signal data, a global positioning system (GPS) data, and a time-stamp data, and wherein the accelerometer signal data comprises one or more accelerometer signals;
   sampling (304), by the system via the one or more hardware processors, each accelerometer signal of the one or more accelerometer signals at a predefined frequency range to obtain one or more sampled signals;
   splitting (306), by the system via the one or more hardware processors, the one or more sampled signals into a predefined window size, to obtain one or more signal windows; and
   for each signal window of the one or more signal windows, identifying (308), by the system via the one or more hardware processors, one or more features by performing:

      converting (308a) at least one sample signal present in a respective signal window into a resultant vector by performing a L2-norm on the at least one sample signal using a Euler's equation;
      normalizing (308b) the resultant vector using a normalization technique to obtain a normalized sample, wherein a predefined normalization threshold is used to perform the normalization using the normalization technique;
      interpolating (308c) the normalized sample using an interpolation technique to obtain an interpolated sample for the respective signal window, wherein the interpolated sample comprises uniform distribution of the at least one sample signal present in the respective signal window;
      filtering (308d) the interpolated sample using a sliding window average filter to obtain a filtered sample;
      detecting (308e) one or more peaks that are present in the filtered sample using a slope change based peak detection technique, wherein a peak whose peak height is more than a predefined peak threshold is detected from among the one or more peaks using the slope change based peak detection technique; and

identifying (308f) the one or more features from each peak of the detected one or more peaks, wherein the one or more features comprises one or more of an amplitude, a slope value and an area under curve.

2. The processor implemented method (300) as claimed in claim1, further comprising:
training, by the system via the one or more hardware processors, a linear support vector machine (SVM) classifier based on the one or more identified features, the GPS data, the time-stamp data and labelled data to obtain a trained SVM classifier, wherein the trained SVM classifier classifies at least one peak present in a real-time accelerometer signal data into one of a class of one or more predefined classes, and wherein the one or more predefined classes comprises a normal usage class, and a drop or fall or strike class.

3. The processor implemented method (300) as claimed in claim 2, further comprising:

using, by the system via the one or more hardware processors, a class information, a real-time GPS data, and a real-time time-stamp data to create a spatio-temporal map of a real-time event, wherein the class information is obtained from the trained SVM classifier, and wherein the real-time GPS data and the real-time time-stamp data are obtained from an object covered under an on-demand insurance;

matching, by the system via the one or more hardware processors, the spatio-temporal map with a real-time user claim story obtained from a customer device associated with a customer, wherein the customer provides the real-time user claim story while applying for an on-demand insurance claim for the object; and

determining, by the system via the one or more hardware processors, whether the on-demand insurance claim as one of a valid claim and an invalid claim, based on the matching.

4. The processor implemented method (300) as claimed in claim 3, further comprising:
displaying, by the system via the one or more hardware processors, the on-demand insurance claim is the valid claim upon determining that the spatio-temporal map matches with the real-time user claim story.

5. The processor implemented method (300) as claimed in claim 1, wherein the normalization technique is min or max normalization technique.

6. A system (102), comprising:

a memory (202) storing instructions;
one or more communication interfaces (206); and
one or more hardware processors (204) coupled to the memory (202) via the one or more communication interfaces (206), wherein the one or more hardware processors (204) are configured by the instructions to:

receive a plurality of inputs from each user device of a plurality of user devices associated with a plurality of users, wherein the plurality of inputs comprises one or more of an accelerometer signal data, a global positioning system (GPS) data and a time-stamp data, and wherein the accelerometer signal data comprises one or more accelerometer signals;
sample each accelerometer signal of the one or more accelerometer signals at a predefined frequency range to obtain one or more sampled signals;
split the one or more sampled signals into a predefined window size, to obtain one or more signal windows; and
for each signal window of the one or more signal windows, identify one or more features by performing:

convert at least one sample signal present in a respective signal window into a resultant vector by performing a L2-norm on the at least one sample signal using a Euler's equation;
normalize the resultant vector using a normalization technique to obtain a normalized sample, wherein a predefined normalization threshold is used to perform the normalization using the normalization technique;
interpolate the normalized sample using an interpolation technique to obtain an interpolated sample for the respective signal window, wherein the interpolated sample comprises uniform distribution of the at least one sample signal present in the respective signal window;
filter the interpolated sample using a sliding window average filter to obtain a filtered sample;
detect one or more peaks that are present in the filtered sample using a slope change based peak detection technique, wherein a peak whose peak height is more than a predefined peak threshold is detected from among the one or more peaks using the slope change based peak detection technique; and identify the one or more features from each peak of the detected one or more peaks, wherein the one or more features comprises one or more of an amplitude, a slope value and an area under curve.

7. The system (102) as claimed in claim 6, wherein the one or more hardware processors (204) are configured by the instructions to:
train a linear support vector machine (SVM) classifier based on the one or more identified features, the GPS data, the time-stamp data and labelled data to obtain a trained SVM classifier, wherein the trained SVM classifier classifies at least one peak present in a real-time accelerometer signal data into one of a class of one or more predefined classes, and wherein the one or more predefined classes comprises a normal usage class, and a drop or fall or strike class.

8. The system as claimed in claim 7, wherein the one or more hardware processors (204) are configured by the instructions to:

use a class information, a real-time GPS data and a real-time time-stamp data to create a spatio-temporal map of a real-time event, wherein the class information is obtained from the trained SVM classifier, and wherein the real-time GPS data and the real-time time-stamp data are obtained from an object covered under an on-demand insurance;
match the spatio-temporal map with a real-time user claim story obtained from a customer device associated with a customer, wherein the customer provides the real-time user claim story while applying for an on-demand insurance claim for the object; and
determine whether the on-demand insurance claim is one of a valid claim and an in-valid claim based on the matching.

9. The system as claimed in claim 8, wherein the one or more hardware processors (204) are configured by the instructions to:
display the on-demand insurance claim is the valid claim upon determining that the spatio-temporal map matches with the real-time user claim story.

10. The system as claimed in claim 6, wherein the normalization technique is min or max normalization technique.

11. One or more non-transitory machine-readable information storage mediums comprising one or more instructions which when executed by one or more hardware processors cause:

receiving, by a system, a plurality of inputs from each user device of a plurality of user devices associated with a plurality of users, wherein the plurality of inputs comprises one or more of an accelerometer signal data, a global positioning system (GPS) data, and a time-stamp data, and wherein the accelerometer signal data comprises one or more accelerometer signals;
sampling, by the system, each accelerometer signal of the one or more accelerometer signals at a predefined frequency range to obtain one or more sampled signals;
splitting, by the system, the one or more sampled signals into a predefined window size, to obtain one or more signal windows; and
for each signal window of the one or more signal windows, identifying, by the system, one or more features by performing:

converting at least one sample signal present in a respective signal window into a resultant vector by performing a L2-norm on the at least one sample signal using a Euler's equation;
normalizing the resultant vector using a normalization technique to obtain a normalized sample, wherein a predefined normalization threshold is used to perform the normalization using the normalization technique;
interpolating the normalized sample using an interpolation technique to obtain an interpolated sample for the respective signal window, wherein the interpolated sample comprises uniform distribution of the at least one sample signal present in the respective signal window;
filtering the interpolated sample using a sliding window average filter to obtain a filtered sample;
detecting one or more peaks that are present in the filtered sample using a slope change based peak detection technique, wherein a peak whose peak height is more than a predefined peak threshold is detected from among the one or more peaks using the slope change based peak detection technique; and
identifying the one or more features from each peak of the detected one or more peaks, wherein the one or more features comprises one or more of an amplitude, a slope value and an area under curve.

**12.** The one or more non-transitory machine-readable information storage mediums of claim 11, training, by the system a linear support vector machine (SVM) classifier based on the one or more identified features, the GPS data, the time-stamp data and labelled data to obtain a trained SVM classifier, wherein the trained SVM classifier classifies at least one peak present in a real-time accelerometer signal data into one of a class of one or more predefined classes, and wherein the one or more predefined classes comprises a normal usage class, and a drop or fall or strike class.

**13.** The one or more non-transitory machine-readable information storage mediums of claim 12 wherein the one or more instructions which when executed further cause:

using, by the system, a class information, a real-time GPS data, and a real-time time-stamp data to create a spatio-temporal map of a real-time event, wherein the class information is obtained from the trained SVM classifier, and wherein the real-time GPS data and the real-time time-stamp data are obtained from an object covered under an on-demand insurance;

matching, by the system, the spatio-temporal map with a real-time user claim story obtained from a customer device associated with a customer, wherein the customer provides the real-time user claim story while applying for an on-demand insurance claim for the object; and

determining, by the system, whether the on-demand insurance claim as one of a valid claim and an invalid claim, based on the matching.

**14.** The one or more non-transitory machine-readable information storage mediums of claim 13 wherein the one or more instructions which when executed by the one or more hardware processors further cause: displaying, by the system, the on-demand insurance claim is the valid claim upon determining that the spatio-temporal map matches with the real-time user claim story.

**15.** The one or more non-transitory machine-readable information storage mediums of claim 11, wherein the normalization technique is min or max normalization technique.

FIG. 1

FIG. 2

receiving, by a system via one or more hardware processors, a plurality of inputs from each user device of a plurality of user devices associated with a plurality of users, wherein the plurality of inputs comprises one or more of an accelerometer signal data, a global positioning system (GPS) data and a time-stamp data, and wherein the accelerometer signal data comprises one or more accelerometer signals

302

sampling, by the system via the one or more hardware processors, each accelerometer signal of the one or more accelerometer signals at a predefined frequency range to obtain one or more sampled signals

304

splitting, by the system via the one or more hardware processors, the one or more sampled signals into a predefined window size, to obtain one or more signal windows

306

for each signal window of the one or more signal windows, identifying, by the system via the one or more hardware processors, one or more features by performing:

308

converting at least one sample signal present in a respective signal window into a resultant vector by performing a L2-norm on the at least one sample signal using a Euler's equation

308a

normalizing the resultant vector using a normalization technique to obtain a normalized sample, wherein a predefined normalization threshold is used to perform the normalization using the normalization technique

308b

A

300

**FIG. 3A**

A

interpolating the normalized sample using an interpolation technique to obtain an interpolated sample for the respective signal window, wherein the interpolated sample comprises uniform distribution of the at least one sample signal present in the respective signal window — 308c

filtering the interpolated sample using a sliding window average filter to obtain a filtered sample — 308d

detecting one or more peaks that are present in the filtered sample using a slope change based peak detection technique, wherein a peak whose peak height is more than a predefined peak threshold is detected from among the one or more peaks using the slope change based peak detection technique — 308e

identifying, by the system via the one or more hardware processors, the one or more features from each peak of the detected one or more peaks, wherein the one or more features comprises one or more of an amplitude, a slope value and an area under curve — 308f

**FIG. 3B**

300

FIG. 4A

FIG. 4B

Europäisches
Patentamt
European
Patent Office
Office européen
des brevets

# EUROPEAN SEARCH REPORT

**Application Number**

EP 25 18 3211

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | BICCHIELLI CHIARA: "Multi-Sensor Fall Detection for Smartphones", BIOMEDICAL JOURNAL OF SCIENTIFIC & TECHNICAL RESEARCH, vol. 34, no. 4, 23 March 2021 (2021-03-23) , XP093309331, ISSN: 2574-1241, DOI: 10.26717/BJSTR.2021.34.005588 * abstract * * page 26981 - page 26983 * ----- | 1-15 | INV. G06N20/10 G06Q20/40 G06Q40/08 |
| Y | US 2020/380840 A1 (GALARNEAU MICHELLE M [US] ET AL) 3 December 2020 (2020-12-03) | 1,2,5-7, 10-12,15 | |
| A | * paragraph [0001] - paragraph [0002] * * paragraph [0004] * * paragraph [0045] * * paragraph [0111] * ----- | 3,4,8,9, 13,14 | |
| Y | US 2021/217093 A1 (FANI HOSSEIN [CA] ET AL) 15 July 2021 (2021-07-15) | 3,4,8,9, 13,14 | |
| A | * paragraph [0019] * * paragraph [0023] * * paragraph [0084] * * paragraph [0091] - paragraph [0096] * * paragraph [0098] * ----- | 1,2,5-7, 10-12,15 | **TECHNICAL FIELDS SEARCHED (IPC)** G06N G07G G06Q |

The present search report has been drawn up for all claims

| Place of search | Date of completion of the search | Examiner |
|---|---|---|
| Munich | 29 August 2025 | Bharucha, Zubin |

EPO FORM 1503 03.82 (P04C01)

## ANNEX TO THE EUROPEAN SEARCH REPORT
## ON EUROPEAN PATENT APPLICATION NO.

EP 25 18 3211

This annex lists the patent family members relating to the patent documents cited in the above-mentioned European search report.
The members are as contained in the European Patent Office EDP file on
The European Patent Office is in no way liable for these particulars which are merely given for the purpose of information.

29-08-2025

| Patent document cited in search report | | Publication date | Patent family member(s) | | Publication date |
|---|---|---|---|---|---|
| US 2020380840 | A1 | 03-12-2020 | CN | 113891680 A | 04-01-2022 |
| | | | EP | 3975827 A1 | 06-04-2022 |
| | | | US | 2020380840 A1 | 03-12-2020 |
| | | | US | 2022246014 A1 | 04-08-2022 |
| | | | WO | 2020243061 A1 | 03-12-2020 |
| US 2021217093 | A1 | 15-07-2021 | CA | 3102116 A1 | 05-12-2019 |
| | | | CN | 112534456 A | 19-03-2021 |
| | | | EP | 3803754 A1 | 14-04-2021 |
| | | | US | 2021217093 A1 | 15-07-2021 |
| | | | WO | 2019227238 A1 | 05-12-2019 |

EPO FORM P0459

For more details about this annex : see Official Journal of the European Patent Office, No. 12/82

**EP 4 668 177 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421046856